# DEMANDE DE BREVET EUROPEEN

(11) **EP 2 025 916 A1**
(43) Date de publication de la demande: **18.02.2009**
(21) Numéro de dépôt: 08290688.4
(22) Date de dépôt: 11.07.2008
(51) Int. Cl.: F02M 35/022, B01D 46/52

(54) **Cartouche de filtration de gluide gazeux et dispositif de filtration intégrant une telle cartouche**

(30) Priorité: 23.07.2007 FR 0705355
(71) Demandeur: Trelleborg Fluid & Acoustic Solutions (TFAS), 44470 Carquefou (FR)
(72) Inventeur: Le Mouellec, Bruno, 44470 Carquefou (FR)
(74) Mandataire: Godineau, Valérie

(57) **Abrégé**

L'invention concerne une cartouche (1) de filtration de fluide gazeux, notamment pour dispositif de filtration d'air pour moteur à combustion interne, ladite cartouche (1) se présentant sous forme d'un corps allongé comprenant un filtre (2) de type plissé à plis (3) parallèles en accordéon, les axes des plis (3) du filtre (2) étant parallèles à l'axe (XX') longitudinal du corps allongé et lesdits plis (3) étant maintenus à écartement prédéterminé, la cartouche délimitant au moins deux zones (8A, 8B) de filtration,

Cette cartouche est caractérisée en ce qu'elle est compartimentée selon au moins une ligne (7) de séparation, transversale à la direction des plis du filtre (2), pour délimiter lesdites au moins deux zones (8A, 8B) de filtration, ladite au moins une ligne (7) de séparation formant liaison articulée des zones (8A, 8B) de filtration entre elles.

## Description

La présente invention concerne une cartouche de filtration de fluide gazeux, notamment pour dispositif de filtration d'air pour moteur à combustion interne, ladite cartouche se présentant sous forme d'un corps allongé comprenant un filtre de type plissé à plis parallèles en accordéon, les plis étant maintenus à écartement prédéterminé, les axes des plis du filtre étant parallèles à l'axe longitudinal du corps allongé et lesdits plis étant maintenus à écartement prédéterminé, la cartouche délimitant au moins deux zones de filtration. L'invention concerne également un dispositif de filtration de fluide gazeux équipé d'une telle cartouche.

Les dispositifs de filtration d'air notamment pour moteur à combustion interne de véhicules automobiles comprennent généralement un boîtier équipé d'au moins une entrée d'air reliée à une prise d'air frais du véhicule et au moins une sortie d'air reliée à l'entrée d'admission en air du moteur.

L'air circulant à l'intérieur du boîtier entre entrée et sortie d'air du boîtier est filtré à l'aide d'une cartouche de filtration généralement montée amovible dans ledit boîtier, la filtration de l'air permettant d'éviter une usure prématurée du moteur.

Comme l'air filtré est chargé en humidité, il est nécessaire de prévoir une récupération des condensats résultant de cette teneur élevée en humidité de l'air.

Jusqu'à présent, dans le cas de cartouches de filtration formées d'un média filtrant ou filtre de type tissé, on dispose les plis du filtre dans le sens de la largeur du corps de cartouche, c'est-à-dire perpendiculairement à l'axe longitudinal du corps constitutif de ladite cartouche et on incline la cartouche autour d'un axe parallèle à l'axe longitudinal du corps de cartouche. Les chemins de décantation formés par la base des plis du filtre sont, du fait de la disposition des plis dans le sens de la largeur du corps de cartouche, de longueur réduite de sorte que l'évacuation des condensats s'opère de manière efficace. La nécessité d'incliner la cartouche pour autoriser une telle évacuation par gravité des condensats résultant de la filtration de l'air augmente l'encombrement en largeur de ladite cartouche.

Or, dans certaines configurations du dispositif de filtration, cette inclinaison est rendue impossible du fait du faible espace à disposition. La cartouche doit alors être inclinée autour d'un axe parallèle à un axe transversal audit corps de cartouche. Dans ce cas, les chemins d'évacuation des condensats sont de longueur très importante de sorte que l'on constate une efficacité moindre de la décantation en raison d'un temps d'évacuation accru et par suite une saturation extrêmement rapide de la cartouche chargée en eau.

En outre, les documents US 2006/277871, US 3.641.744, US 4.129.429 et US 3.022.859 proposent chacun un boîtier de filtration équipé d'une cartouche de filtration compartimentée en plusieurs zones de filtration. Cependant, les zones de filtration de chaque cartouche sont maintenues entre elles par une structure rigide qui ne permet pas d'adapter la position desdites zones de filtration en fonction de la configuration géométrique du boîtier de filtration. En particulier, pour différents boîtiers de filtration, lorsque les parties du boîtier formant siège de réception de la cartouche ne sont pas agencées de la même façon d'un boîtier à un autre ou lorsque les bacs de récupération des condensats sont agencés différemment, il faut prévoir une géométrie de cartouche particulière pour chaque boîtier de filtration.

Un but de la présente invention est donc de proposer une cartouche de filtration dont la conception permet d'adapter l'agencement des zones de filtration à l'intérieur d'un boîtier de filtration en fonction de la configuration géométrique dudit boîtier.

Un but de la présente invention est également de proposer une cartouche de filtration dont la conception permet pour des dimensions extérieures de cartouche inchangées de réduire son encombrement en largeur sans nuire à l'efficacité de ladite cartouche, notamment en terme d'évacuation des condensats.

Un autre but de la présente invention est de proposer un dispositif de filtration dont la conception permet, en raison de la conception de la cartouche de filtration logée à l'intérieur du dispositif, une efficacité d'évacuation des condensats accrue sans nuire à l'encombrement de l'ensemble.

A cet effet, l'invention a pour objet une cartouche de filtration de fluide gazeux, notamment pour dispositif de filtration d'air pour moteur à combustion interne, ladite cartouche se présentant sous forme d'un corps allongé comprenant un filtre de type plissé à plis parallèles en accordéon, les axes des plis du filtre étant parallèles à l'axe longitudinal du corps allongé et lesdits plis étant maintenus à écartement prédéterminé, la cartouche délimitant au moins deux zones de filtration,
caractérisée en ce que la cartouche est compartimentée selon au moins une ligne de séparation, transversale aux axes des plis du filtre, pour délimiter lesdites au moins deux zones de filtration, ladite au moins une ligne de séparation formant liaison articulée des zones de filtration entre elles.

Autrement dit, la cartouche est compartimentée selon un plan transversal à l'axe longitudinal de la cartouche en au moins deux zones de filtration présentant une liaison articulée. La liaison articulée forme une charnière permettant de faire varier la position relative des zones de filtration. Ainsi, chaque zone de filtration articulée peut être positionnée dans un boîtier de filtration selon l'inclinaison souhaitée pour s'adapter à la configuration géométrique du boîtier. Le montage de la cartouche de filtration selon l'invention dans un boîtier de filtration est ainsi facilité. En outre, grâce à ladite au moins une liaison articulée, un même type de cartouche selon l'invention peut être utilisé pour des boîtiers présentant des configurations géométriques différentes. En particulier, les zones de filtration de la cartouche selon l'invention peuvent être positionnées en fonction des positions des bacs de décantation et des parties formant siège de réception de la cartouche.

Les plis des zones de filtration forment des chemins d'évacuation ou de ruissellement des condensats. En effet, il suffit d'incliner les zones de filtration autour de la ligne de séparation pour évacuer aisément par gravité les condensats. Le fait de compartimenter la cartouche selon une ligne de séparation transversale permet de délimiter deux zones de filtration dont les plis sont de longueur réduite. Il en résulte une réduction de la longueur de chaque chemin d'évacuation ou de ruissellement des condensats de sorte que le temps d'évacuation des condensats est réduit.

Préférentiellement, lesdites au moins deux zones de filtration articulées sont aptes à prendre au moins deux positions, à savoir l'une dans laquelle lesdites zones de filtration sont sensiblement alignées l'une avec l'autre, et l'autre dans laquelle lesdites zones de filtration sont inclinées l'une par rapport à l'autre et forment un angle entre elles.

Avantageusement, ladite au moins une liaison articulée des zones de filtration de la cartouche est formée par une garniture d'étanchéité transversale audit corps.

De préférence, la cartouche comporte une garniture d'étanchéité périphérique servant au maintien des plis.

L'invention a encore pour objet un dispositif de filtration, notamment pour la filtration de l'air d'un moteur à combustion interne, du type comprenant au moins un boîtier équipé d'au moins une entrée et d'au moins une sortie d'air et d'une cartouche de filtration se présentant sous forme d'un corps allongé comprenant au moins un filtre de type plissé à plis parallèles en accordéon, les axes des plis du filtre étant parallèles à l'axe longitudinal du corps allongé et lesdits plis étant maintenus à écartement prédéterminé, la cartouche délimitant au moins deux zones de filtration, ladite cartouche étant logée de manière étanche au fluide à l'intérieur d'un siège dudit boîtier, caractérisé en ce que la cartouche de filtration qui est compartimentée est du type précité.

L'invention sera bien comprise à la lecture de la description suivante d'exemples de réalisation, en référence aux dessins annexés dans lesquels :

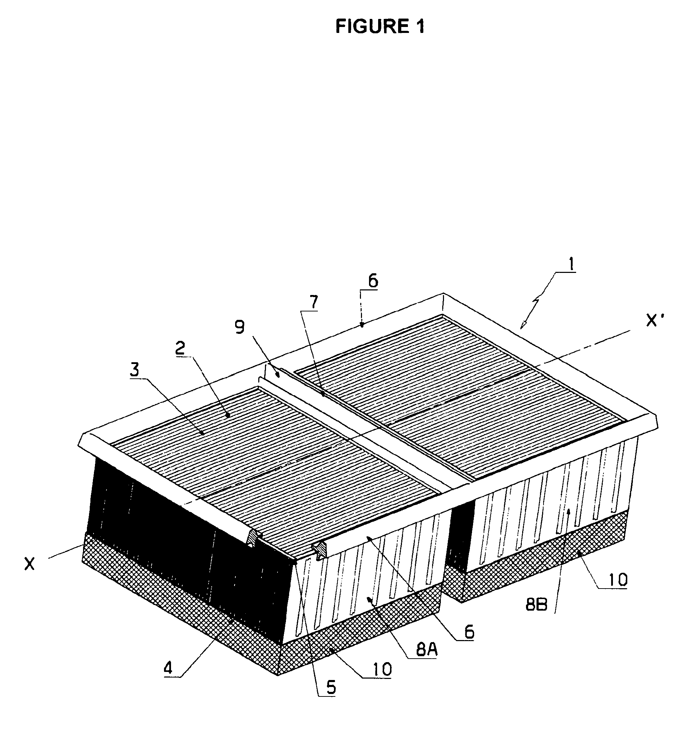

La figure 1 représente une vue en perspective d'une cartouche de filtration conforme à l'invention ;
La figure 2 représente une vue en coupe longitudinale d'un dispositif de filtration conforme à l'invention ;

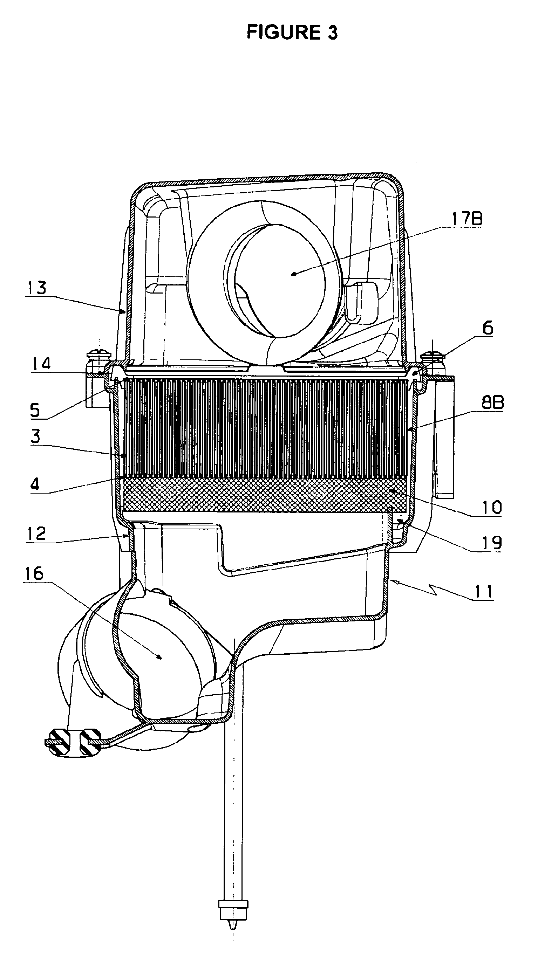

La figure 3 représente une vue en coupe transversale du dispositif de filtration représenté à la figure 2 ;
La figure 4 représente une vue schématique d'un autre mode de réalisation d'une cartouche de filtration et des bacs de décantation associés.

Comme mentionné ci-dessus, la cartouche 1 de filtration de fluide gazeux, objet de l'invention, est plus particulièrement destinée à être installée dans un dispositif de filtration d'air pour moteur à combustion interne.

Cette cartouche 1 se présente sous forme d'un corps allongé comprenant un filtre 2 plissé à plis 3 parallèles en accordéon. Ces plis 3 sont maintenus à écartement prédéterminé. Pour leur maintien à écartement prédéterminé, ces plis, dont les faces en regard sont côté air filtré généralement cannelées, sont maintenus à leur sommet 5 par une garniture 6 d'étanchéité périphérique. A cet effet, la garniture 6 se présente au moins sous forme d'un joint souple généralement en caoutchouc qui relie les sommets des plis entre eux. Généralement, chaque pli est en outre fermé à chacune de ses extrémités, à l'aplomb de la garniture 6 d'étanchéité périphérique, par une garniture d'étanchéité également périphérique de type collage. De la colle est en effet appliquée le long des bords des faces en regard du filtre côté air filtré dudit filtre.

La cartouche 1 est compartimentée selon au moins une ligne 7 de séparation, transversale à la direction des plis du filtre 2, pour délimiter au moins deux zones 8A, 8B de filtration. Ladite au moins une ligne 7 de séparation forme une liaison articulée, en particulier une liaison pivot des zones 8A, 8B de filtration entre elles. Les axes des plis 3 du filtre 2 de chaque zone 8A, 8B de filtration sont parallèles à l'axe XX' longitudinal du corps allongé, ce qui permet par inclinaison desdites zones de filtration autour d'un axe transversal du corps allongé, tel que la ligne de séparation 7, d'évacuer par gravité des condensats.

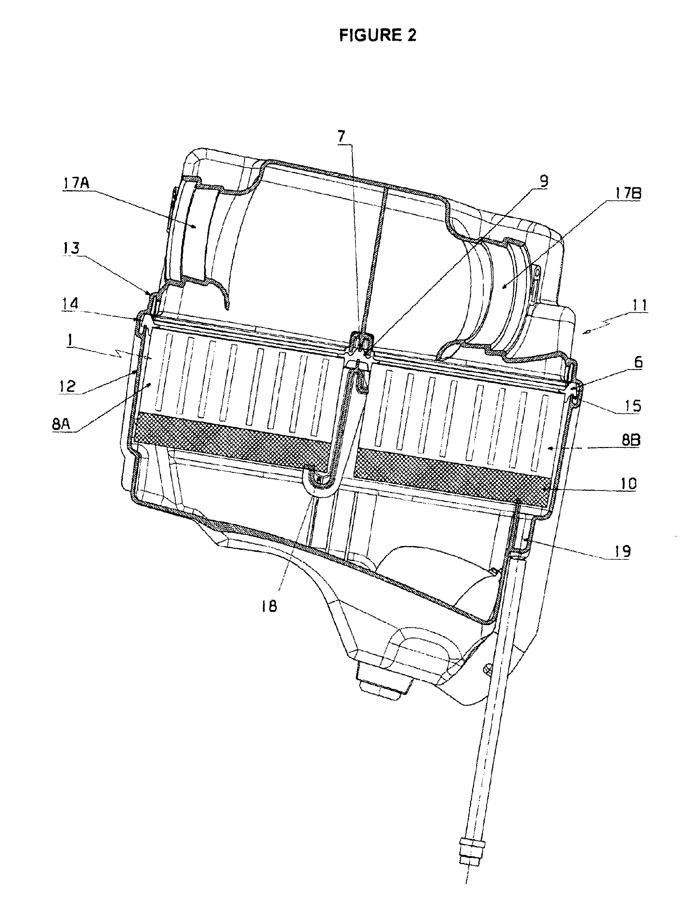

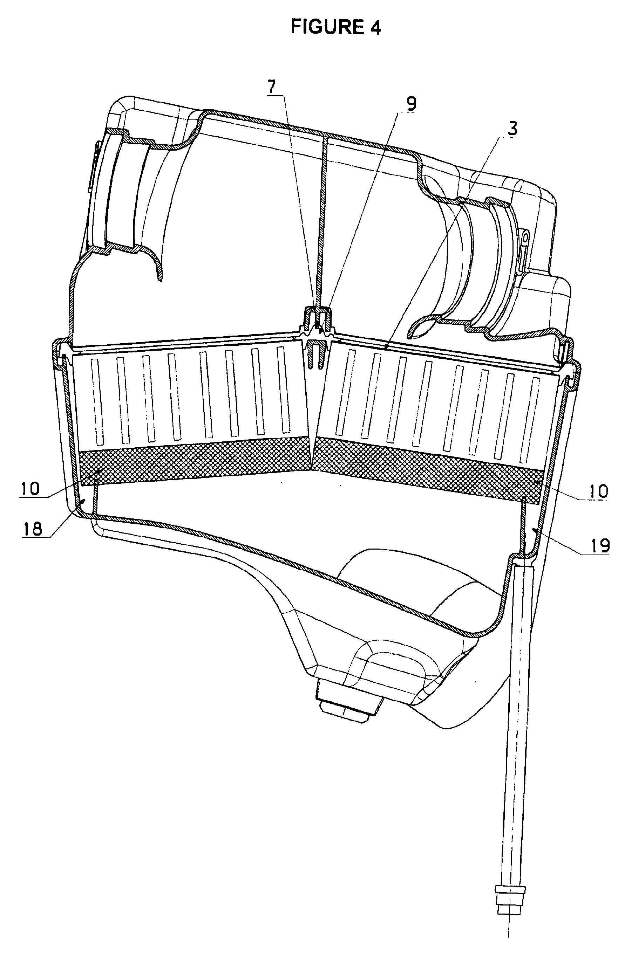

Comme illustré par les modes de réalisation des figures 2 et 4, lesdites au moins deux zones de filtration 8A, 8B articulées et reliées entre elles par une liaison pivot de type charnière sont aptes à prendre au moins deux positions, à savoir l'une dans laquelle lesdites zones 8A, 8B de filtration sont sensiblement alignées l'une avec l'autre (figure 2), et l'autre dans laquelle lesdites zones 8A, 8B de filtration sont inclinées l'une par rapport à l'autre (figure 4).

Dans les exemples représentés, la cartouche 1 comporte outre une garniture d'étanchéité périphérique, une garniture 9 d'étanchéité supplémentaire transversale audit corps. Cette garniture 9 d'étanchéité forme la ligne 7 de séparation des zones 8A, 8B de filtration entre elles. Ainsi, cette garniture 9 d'étanchéité délimite avec la garniture 6 d'étanchéité périphérique deux cadres reliés l'un à l'autre par l'un de leurs côtés, chaque cadre correspondant à la délimitation d'une zone de filtration. Dans les exemples représentés, les cadres et par suite les zones 8A, 8B de filtration sont de dimension identique. La cartouche 1 est donc ici compartimentée le long d'une ligne transversale médiane.

Dans ce mode de réalisation particulier, la garniture 9 d'étanchéité supplémentaire transversale forme un axe d'articulation entre les zones 8A, 8B de filtration.

Il est ainsi possible, selon l'inclinaison retenue, d'associer à chaque zone de filtration 8A, 8B un bac de récupération des condensats, dont le positionnement et la conception seront décrits ci-après.

Il est encore prévu à la base 4 des plis 3 un matelas 10 filtrant. Ce matelas 10 permet de retenir les particules les plus grossières et assure une première filtration de l'air avant que celui-ci ne traverse le filtre 2 plissé en accordéon.

De préférence, les garnitures d'étanchéité périphériques 6 et transversale 9 forment une garniture monolithique. Avantageusement, ces garnitures d'étanchéité sont réalisées simultanément par surmoulage du filtre. Pour ce faire, les zones de filtration 8A et 8B formant le filtre 2 sont disposées dans un moule dont la cavité de moulage correspond à l'agencement des garnitures d'étanchéité à réaliser. La matière expansive constituant les garnitures d'étanchéité est alors coulée dans le moule et, en s'expansant, forme les garnitures d'étanchéité souhaitées en prise avec les zones de filtration pour maintenir les plis écartés par leur sommet.

Une telle cartouche 1 de filtration, telle que décrite ci-dessus, est plus particulièrement destinée à être logée à l'intérieur d'un boîtier 11 d'un dispositif de filtration.

Ce boîtier 11 est généralement formé d'une base 12 et d'un couvercle 13 assemblés l'un à l'autre par un plan de joint ou plan de fermeture 14. La base 12 et le couvercle 13 du boîtier 11 sont des pièces plastiques généralement moulées en forme de demi-coquilles.

Le boîtier 11 ainsi constitué, est équipé d'au moins une entrée 16 et d'une sortie 17A ou 17B d'air. L'entrée 16 est généralement ménagée dans la base du boîtier 11, tandis que la ou les sorties d'air 17A, 17B sont ménagées dans la partie formant couvercle du boîtier 11.

La cartouche 1 de filtration telle que décrite ci-dessus, est logée de manière étanche au fluide à l'intérieur d'un siège 15 dudit boîtier 11.

Le siège 15 de la cartouche est, dans les exemples représentés, ménagé au moins au voisinage du plan 14 de fermeture dudit boîtier 11.

Ainsi, la garniture 6 d'étanchéité périphérique de type joint maintenant à écartement prédéterminé à leurs sommets 5 les plis 3, constitue en outre la garniture d'étanchéité de la liaison entre base 12 et couvercle 13 du boîtier 11. Cette garniture 6 d'étanchéité périphérique s'étend donc au niveau du plan de joint ou de fermeture 14 dudit boîtier 11.

Cette zone du plan de joint est aménagée pour délimiter une surface d'appui de la garniture 6 d'étanchéité interne au boîtier et en forme de cadre. Le boîtier 11 peut comporter d'autres parties aménagées pour former au moins l'un des éléments du siège de la cartouche 1.

Ce boîtier 11 comporte, dans ou au voisinage de la zone du siège 15 de la cartouche 1 de filtration, au moins un, de préférence deux bacs 18, 19 de récupération des condensats. Chaque bac 18, 19 est associé à une zone 8A, 8B de filtration de ladite cartouche 1, en vue de la collecte des condensats issus de la zone 8A, 8B de filtration à l'intérieur du bac 18, 19 associé. Ainsi, dans les exemples représentés, le bac 18 permet la récupération des condensats issus de la zone 8A de filtration, tandis que le bac 19 permet la collecte des condensats issus de la zone 8B de filtration. Bien évidemment, un seul et même bac pourrait être utilisé pour la collecte des condensats des deux zones de filtration. Cette solution nécessiterait toutefois de réaliser un bac de grande dimension pouvant nuire à l'encombrement et à la simplicité de fabrication de l'ensemble.

Dans les exemples représentés, chaque bac 18, 19 de récupération des condensats, encore appelé bac de décantation, est disposé au voisinage d'une des extrémités libres des plis 3 d'une zone 8A, 8B de filtration.

Dans l'exemple représenté à la figure 2, le bac 18 de décantation est formé par une paroi verticale transversale séparant la base 12 du boîtier 11 en deux parties sensiblement égales, cette paroi verticale étant recourbée à sa base pour délimiter une gouttière constituant la zone de collecte du bac 18 de récupération des condensats.

Cette zone en forme de gouttière du bac 18 de récupération des condensats, s'étend au-dessous de l'une des extrémités libres des plis 3 de la zone 8A de filtration à l'aplomb desdites extrémités libres pour collecter les condensats s'écoulant par gravité le long de la base 4 desdits plis.

Dans ce mode de réalisation, les bacs de récupération des condensats et le boîtier 11 sont réalisés d'une seule pièce et forment un ensemble monobloc. En effet, généralement au moins l'un des bacs 18, 19 de récupération des condensats est formé d'une seule pièce avec le boîtier 11.

On note que dans l'exemple décrit ci-dessus, la paroi verticale transversale servant à la délimitation de l'un des bacs se prolonge dans le couvercle du boîtier pour former une cloison séparatrice délimitant dans ledit couvercle deux chambres équipées d'une sortie d'air.

Le bac 19 de décantation est quant à lui formé par l'une des parois de la base 12 constitutive du boîtier 11, cette paroi étant pourvue d'une pluralité de décrochements délimitant la zone de collecte du bac 19 de récupération des condensats. A nouveau, cette zone de collecte du bac 19 de récupération des condensats est positionnée à l'aplomb d'une des extrémités libres des plis 3 de la zone 8B de filtration et s'étend au-dessous de la cartouche de filtration pour collecter par gravité les condensats s'écoulant depuis ladite zone.

A partir d'un tel mode de réalisation plusieurs positionnements des bacs 18, 19 de récupération des condensats peuvent être envisagés.

Ainsi au moins l'un, représenté en 18 aux figures, des bacs 18, 19 de récupération des condensats peut être disposé dans la zone de séparation des zones 8A, 8B de filtration entre elles. Tel est le cas de l'exemple représenté à la figure 2 où le bac 18 est formée par une paroi transversale médiane dudit boîtier, tandis que l'autre bac est formée par une paroi périphérique dudit boîtier.

Dans un autre mode de réalisation, il pourrait être envisagé que les deux bacs 18, 19 de récupération des condensats soient disposés dans la zone de séparation des zones 8A, 8B de filtration entre elles. Dans ce mode de réalisation, les deux bacs pourraient être réalisés sous forme d'un seul et même bac.

Dans encore un autre mode de réalisation représenté à la figure 4, les bacs 18, 19 de récupération des condensats peuvent être disposés le long du bord de la zone 8A, 8B de filtration associée parallèle à celui servant à la séparation des zones 8A, 8B de filtration entre elles. Ainsi, dans ce dernier mode de réalisation, les bacs peuvent à chaque fois être formés par une paroi périphérique de la base 12 du boîtier 11, à la manière de ce qui a été représenté à la figure 2 pour le bac 19 de récupération des condensats.

La position relative des zones 8A, 8B de filtration et leur inclinaison est donc fonction de la position des bacs 18, 19 de décantation.

Dans l'exemple représenté à la figure 4, les zones 8A, 8B de filtration sont inclinées depuis un point haut correspondant à l'une des extrémités libres des plis 3 de chacune des zones de filtration prise au niveau de la zone de séparation desdites zones de filtration entre elles, en direction d'un point bas disposé au voisinage de l'autre extrémité libre des plis de chaque zone de filtration s'étendant au voisinage de l'une des parois du boîtier 11. En d'autres termes, ces zones 8A, 8B de filtration forment un V inversé entre elles.

L'inclinaison inverse peut être envisagée dans le cas où les bacs de décantation sont chacun disposés dans la zone de séparation des zones 8A, 8B de filtration entre elles. Dans ce cas, les zones 8A, 8B de filtration forment, vu en coupe, un V entre elles.

Enfin, dans le cas où l'un des bacs de récupération des condensats est disposé dans la zone de séparation des zones de filtration entre elles, tandis que l'autre bac est disposé au voisinage du bord d'une zone de filtration parallèle à celui servant à la séparation des zones de filtration, l'inclinaison desdits zones sera adaptée.

Il en résulte un grand nombre de possibilités de positionnements des zones de filtration et des bacs de récupération des condensats.

En dépit de sa configuration différente, une telle cartouche de filtration fonctionne de manière similaire à une cartouche de filtration traditionnelle. Cette cartouche de filtration est, de manière similaire à une cartouche de filtration traditionnelle, généralement montée amovible à l'intérieur du boîtier.

A cet effet, la garniture 6 d'étanchéité périphérique de type joint et la garniture 9 d'étanchéité supplémentaire transversale audit corps de cartouche viennent en appui sur les parties de siège correspondantes du boîtier 11 lors de leur insertion dans la base 12 dudit boîtier 11. Le couvercle 13 dudit boîtier 11 peut alors être positionné pour permettre la fermeture du boîtier 11.

Lors de la mise en place du boîtier 13, la garniture 6 d'étanchéité périphérique de type joint de la cartouche 1 assure l'étanchéité du plan de fermeture entre lesdits éléments constitutifs du boîtier 11. La filtration peut alors débuter.

Au cours de cette filtration, les condensats issus de l'air filtré sont récupérés par gravité dans chacun des bacs 18, 19 de récupération des condensats, à la manière de ce qui s'opérait traditionnellement pour une cartouche 1 de filtration équipée d'un seul bac de récupération des condensats et dont l'inclinaison s'opérait dans le sens de la largeur de ladite cartouche.

Dans un tel dispositif de filtration et de manière traditionnelle, l'air frais à filtrer entre par ladite entrée 16 d'air dans le boîtier et est évacué dudit boîtier après passage à travers le matelas 10 filtrant et le filtre 2 de la cartouche 1 de filtration par l'intermédiaire des sorties 17A, 17B d'air raccordées généralement à l'alimentation en air du moteur à combustion interne.

## Revendications

1. Cartouche (1) de filtration de fluide gazeux, notamment pour dispositif de filtration d'air pour moteur à combustion interne, ladite cartouche (1) se présentant sous forme d'un corps allongé comprenant au moins un filtre (2) de type plissé, à plis (3) parallèles en accordéon, les axes des plis (3) du filtre (2) étant parallèles à l'axe (XX') longitudinal du corps allongé et lesdits plis (3) étant maintenus à écartement prédéterminé, la cartouche délimitant au moins deux zones (8A, 8B) de filtration,
**caractérisée en ce que** la cartouche (1) est compartimentée selon au moins une ligne (7) de séparation, transversale à la direction des plis du filtre (2), pour délimiter lesdites au moins deux zones (8A, 8B) de filtration, ladite au moins une ligne (7) de séparation formant liaison articulée des zones (8A, 8B) de filtration entre elles.

2. Cartouche (1) de filtration selon la revendication 1, **caractérisée en ce que** lesdites au moins deux zones de filtration (8A, 8B) articulées sont aptes à prendre au moins deux positions, à savoir l'une dans laquelle lesdites zones (8A, 8B) de filtration sont sensiblement alignées l'une avec l'autre, et l'autre dans laquelle lesdites zones (8A, 8B) de filtration sont inclinées l'une par rapport à l'autre.

3. Cartouche (1) de filtration selon l'une des revendications précédentes,
**caractérisée en ce que** ladite au moins une liaison articulée des zones (8A, 8B) de filtration de la cartouche (1) est formée par une garniture (9) d'étanchéité transversale audit corps.

4. Cartouche de filtration selon la revendication 3,
**caractérisée en ce que** la cartouche (1) comporte une garniture (6) d'étanchéité périphérique servant au maintien des plis.

5. Cartouche de filtration selon l'une des revendications précédentes,
**caractérisée en ce qu'**il est prévu à la base (4) des plis (13), un matelas (10) filtrant.

6. Dispositif de filtration, notamment pour la filtration de l'air d'un moteur à combustion interne, du type comprenant au moins un boîtier (11) équipé d'au moins une entrée (16) et d'au moins une sortie (17A, 17B) d'air et d'une cartouche (1) de filtration se présentant sous forme d'un corps allongé comprenant au moins un filtre (2) de type plissé à plis (3) parallèles en accordéon, les axes des plis (3) du filtre (2) étant parallèles à l'axe (XX') longitudinal du corps allongé et lesdits plis (3) étant maintenus à écartement prédéterminé, la cartouche délimitant au moins deux zones (8A, 8B) de filtration, ladite cartouche (1) étant logée de manière étanche au fluide à l'intérieur d'un siège (15) dudit boîtier (11),
**caractérisé en ce que** la cartouche de filtration est conforme à l'une des revendications 1 à 5.

7. Dispositif de filtration selon la revendication 6,
**caractérisé en ce que** le boîtier (11) comporte, dans ou au voisinage de la zone du siège (15) de la cartouche (1) de filtration, au moins deux bacs (18, 19) de récupération des condensats, chaque bac (18, 19) étant associé à une zone (8A, 8B) de filtration de ladite cartouche (1), en vue de la collecte des condensats issus de la zone (8A, 8B) de filtration à l'intérieur du bac (18, 19) associé.

8. Dispositif de filtration selon la revendication 7,
**caractérisé en ce que** chaque bac (18, 19) de récupération des condensats est disposé au voisinage des extrémités libres des plis (3) d'une zone (8A, 8B) de filtration.

9. Dispositif de filtration selon l'une des revendications 7 et 8,
**caractérisé en ce que** au moins l'un (18) des bacs (18, 19) de récupération des condensats est disposé dans la zone de séparation des zones (8A, 8B) de filtration entre elles.

10. Dispositif de filtration selon l'une des revendications 7 à 9,
**caractérisé en ce que** les deux bacs (18, 19) de récupération des condensats sont disposés dans la zone de séparation des zones (8A, 8B) de filtration entre elles.

11. Dispositif de filtration selon l'une des revendications 7 à 10,
**caractérisé en ce qu'**au moins l'un des bacs (18, 19) de récupération des condensats est formé d'une seule pièce avec le boîtier (11).

12. Dispositif de filtration selon l'une des revendications 7 et 8,
**caractérisé en ce que** les bacs (18, 19) de récupération des condensats sont disposés le long du bord de la zone (8A, 8B) de filtration associée parallèle à celui servant à la séparation des zones (8A, 8B) de filtration entre elles.
